# EUROPÄISCHE PATENTANMELDUNG

(11) **EP 3 747 773 A2**
(43) Veröffentlichungstag der Anmeldung: **09.12.2020**
(21) Anmeldenummer: 20178222.4
(22) Anmeldetag: 15.04.2016
(51) Int. Cl.: B64D 27/02, B64D 27/24

(54) **ELEKTROANTRIEB FÜR EIN LUFTFAHRZEUG UND HYBRIDSYSTEM FÜR EIN LUFTFAHRZEUG**

(30) Priorität: 15.04.2015 DE 102015105787
(62) Teilanmeldung aus: 16717893.8
(71) Anmelder: Schwöller, Johann, 5204 Strasswalchen (AT)
(72) Erfinder: Schwöller, Johann, 5204 Strasswalchen (AT)
(74) Vertreter: HGF

(57) **Zusammenfassung**

Die Erfindung sieht einen Elektroantrieb für ein Luftfahrzeughybridsystem vor.

## Beschreibung

Die vorliegende Erfindung betrifft einen Elektroantrieb für ein Luftfahrzeug sowie ein Hybridsystem für ein Luftfahrzeug.

In der DE 10 2007 017 332 A1 ist ein Luftfahrzeug mit einem Verbrennungsmotor beschrieben, durch dessen Antriebsleistung ein Propeller antreibbar ist. Der Verbrennungsmotor wirkt mit einer elektrischen Maschine zusammen, die in einer ersten Betriebsart als Elektromotor und in einer zweiten Betriebsart als elektrischer Generator betreibbar ist.

Flugzeuge werden meist von einem Verbrennungsmotor angetrieben. In bestimmten Flugphasen werden diese Verbrennungsmotoren mit erhöhter Leistung angetrieben. Diese Überschussleistung wird beispielsweise beim Start des Flugzeugs oder in der sich an den Start anschließenden sicherheitskritischen Steigphase benötigt. Der Verbrennungsmotor wird dabei in der Regel mit besonders hoher Drehzahl und Last betrieben, wodurch sich der Verschleiß überproportional erhöht.

Weiterhin sind Flugzeuge bekannt, die durch einen Elektromotor angetrieben werden. In der DE 195 12 816 A1 ist beispielsweise ein Segelflugzeug mit Hilfsmotor offenbart, der als Elektromotor ausgebildet ist. Die Energieversorgung des Elektromotors wird durch eine in den Tragflächen angeordnete Batterieeinrichtung sichergestellt.

In der US 2014/0346280 A1, der US 2013/0190949 A1, der DE 69811422 T2 und der US 5,188,316 A sind Systeme zur Leistungssteuerung von Luftfahrzeugen offenbart.

Aus der DE 10 2013 209 388 A1, der DE 10 2013 102 194 A1, der US 2013/227950 A1, der US 2014/010652 A1 und der DE 10 2007 017 332 A1 gehen Hybridantriebe für Luftfahrzeuge hervor.

Um bei herkömmlichen Flugzeugen eine erhöhte Antriebsleistung bereitzustellen, wurden bisher Verbrennungsmotoren mit größerer Leistung verwendet. Die dadurch bedingte Gewichtszunahme führt jedoch zu höheren Anforderungen an die Flugzeugstruktur und damit zu einem höheren Gesamtgewicht sowie zu einem erhöhten Treibstoffverbrauch im Reiseflug.

Aufgabe der vorliegenden Erfindung ist es daher, einen Elektroantrieb für ein Luftfahrzeug bereitzustellen, durch den dem Luftfahrzeug mehr Leistung zur Verfügung steht und der einfach aufgebaut und leicht, insbesondere auch nachträglich, montierbar ist.

Eine weitere Aufgabe ist es, ein effizientes und einfach aufgebautes Hybridsystem für ein Luftfahrzeug vorzusehen.

Diese Aufgaben werden mit einem Elektroantrieb für ein Luftfahrzeug gemäß Anspruch 1 sowie mit einem Hybridsystem für ein Luftfahrzeug gemäß Anspruch 4 gelöst. Vorteilhafte Ausgestaltungen sind in den davon abhängigen Ansprüchen angegeben.

Erfindungsgemäß ist ein Elektroantrieb für ein Luftfahrzeughybridsystem vorgesehen. Dieser Elektroantrieb umfasst einen Rotor, einen Stator, wobei der Stator mit einer Struktur eines Luftfahrzeuges verbindbar ist und der Rotor einen ringförmigen Flansch mit einer Wellendurchgangsöffnung zur Befestigung an einem Propellerflansch aufweist, wobei der Flansch zumindest aus zwei Teilen ausgebildet ist, wobei ein jedes dieser Teile des Flansches einen Abschnitt der Wellendurchgangsöffnung begrenzt.

Unter einer Struktur eines Luftfahrzeuges wird bspw. ein Motor- oder Getriebegehäuse oder Komponenten davon verstanden. Insbesondere ist ein nicht bewegliches, d.h. ein ortsfestes Bauteil eines Luftfahrzeuges gemeint.

Der erfindungsgemäße Elektroantrieb bietet somit den Vorteil, dass der Propeller eines Flugzeuges direkt antreibbar ist, wodurch der Antrieb weniger verlustbehaftet ist, da der Elektroantrieb direkt hinter dem Propellerflansch anordbar und mit diesem verbindbar ist.

Insbesondere ist vorteilhaft, da der Flansch zumindest zweigeteilt ausgebildet ist, dass weder der Propellerflansch noch irgendwelche anderen Getriebe- oder Motorkomponenten demontiert werden müssen, um den erfindungsgemäßen Elektronantrieb zu montieren bzw. damit ein Luftfahrzeug nachzurüsten. Es genügt einfach den Propeller zu demontieren und den erfindungsgemäßen Elektroantrieb am Propellerflansch zu montieren.

Der Rotor mit den umliegenden Permanentmagneten ist dabei direkt mit dem Propellerflansch verbunden und überträgt so das Drehmoment des Elektromotors direkt auf den Propeller.

Eine Stirnseite des Flansches wird als Propellerseite und eine andere Stirnseite als Motorseite bezeichnet, wobei auf der Motorseite ein in etwa rohrförmiger Lageraufnahmeabschnitt ausgebildet sein kann und auf der Propellerseite ein in etwa rohrförmiger Rotoraufnahmeabschnitt ausgebildet sein kann.

Der Stator kann eine ringförmige Lagereinrichtung und eine Drehmomentabstützung aufweisen, wobei die Lagereinrichtung im Bereich des Lageraufnahmeabschnitts des zweigeteilten ringförmigen Flansches anordbar sein kann und der Rotor auf dem Rotoraufnahmeabschnitt des Montageflansches fixierbar sein kann.

Der Stator ist über die Lagereinrichtung, z.B. ein Wälzlager, und den zumindest zweigeteilten Flansch drehbar gelagert. Das Gegendrehmoment des Stators wird über die Drehmomentabstützung an ein Motorgehäuse oder einen Motorträger abgegeben und dort aufgenommen.

Dadurch, dass der erfindungsgemäße Elektroantrieb einen zumindest zweigeteilten ringförmigen Flansch aufweist, ist es nun möglich, den Elektromotor direkt, d.h. ohne Demontage anderer Komponenten mit Ausnahme des Propellers an der Rückseite des Propellerflansches anzuordnen, an dessen Vorderseite dann wieder der Propeller befestigt wird.

Herkömmliche Elektromotoren bzw. deren "Wellendurchgangsöffnung" sind an sich kleiner als ein Propellerflansch. Daher ist es erforderlich, den Verbrennungsmotor und/oder dessen Getriebekomponenten zu demontieren, um den Elektroantrieb hinter dem Propellerflansch zu montieren.

Der Stator des erfindungsgemäßen Elektroantriebes, der die elektrischen Magnetwicklungen aufnimmt, weist eine ringförmige Lagereinrichtung auf, die einen größeren Innendurchmesser bzw. eine größere Wellendurchgangsöffnung als der Propellerflansch besitzt. Auf diese Weise lässt sich der Stator samt der Lagereinrichtung von der Propellerseite bei demontiertem Propeller über den Propellerflansch schieben.

Um den Stator nun von der Hinterseite an dem Propellerflansch befestigen zu können, ist der zumindest zweigeteilte ringförmige Flansch vorgesehen.

Der zweigeteilte Flansch wird zwischen Propellerflansch und dem Stator eingesetzt und in die Lagereinrichtung, z. B. ein entsprechend dimensioniertes Wälzlager, geschoben.

Die Lagereinrichtung übernimmt auf diese Weise die Zentrierung und das Zusammensetzen des zumindest zweigeteilten Flansches.

Anschließend wird der Stator samt Flansch nach vorne an dem Propellerflansch angesetzt.

Der Rotor des Elektroantriebes mit rundum angeordneten Permanentmagneten kann nun ebenfalls über den Propellerflansch geschoben werden und mit dem zumindest zweigeteilten Flansch, beispielsweise mittels Schraubenverbindungen, verbunden werden.

Mittels des erfindungsgemäßen Elektroantriebes für ein Luftfahrzeug ist es möglich, in bestimmten Flugsituationen wie z. B. beim Start, für die Steigphase oder im Kunstflug kurzfristig mehr Motorleistung zur Verfügung zu stellen.

Weiterhin ist es durch den Elektroantrieb möglich, die Startrollwege zu verkürzen, Hindernisse direkt nach dem Start oder im Flug sicher zu überwinden, die Mindestsicherheitsflughöhe kann schneller erreicht werden und insbesondere steht für Steigphasen im Kunstflug mehr Motorleistung zur Verfügung.

Aus dem Stand der Technik ist es bekannt, diese zusätzlich erforderliche Motorleistung mittels eines leistungsstärkeren, größeren und damit auch schwereren Verbrennungsmotors bereitzustellen. Dies hat den Nachteil, dass dann im normalen Reiseflug ein derart größerer Verbrennungsmotor im niedrigeren, ineffizienteren Teillastbereich betrieben wird. Das bedeutet, ein derartiger Verbrennungsmotor wird dann die meiste Flugzeit nicht im optimalen Betriebspunkt betrieben, wodurch die Effizienz sinkt und die spezifischen Verbrauchswerte des Verbrennungsmotors steigen.

Durch das Vorsehen eines erfindungsgemäßen Elektroantriebs können Flugzeuge, bei denen ein erhöhter Bedarf an Motorleistung besteht, einen herkömmlichen kleinen, leichten und effizienten Verbrennungsmotor verwenden, der im Reiseflug in seinem optimalen Betriebspunkt betrieben werden kann.

Die in den vorstehend beschriebenen Situationen erforderliche zusätzliche Leistung wird mittels des erfindungsgemäßen Elektroantriebes bereitgestellt.

Da die Leistung nur kurzfristig benötigt wird, kann ein entsprechender elektrischer Energiespeicher, z. B. ein Akkumulator, sehr klein und leicht ausgebildet werden, da die elektrische Leistung zumeist nur kurzfristig benötigt wird.

Hierbei ist vorgesehen, dass im Dauerflug der Verbrennungsmotor annähernd an seinem optimalen Betriebspunkt, z. B. 85 % seiner Leistung, läuft. Beim Start oder in der Steigphase sowie in kurzen Kunstflug-Phasen ist dann vorgesehen, dass der Motor 100 % seiner Leistung abgibt. Der zusätzliche Leistungsbedarf wird dann durch den erfindungsgemäßen Elektroantrieb bereitgestellt.

Weiterhin kann erfindungsgemäß eine napfförmige Zentriereinrichtung vorgesehen sein.

An der hinteren Seite des Propellerflansches sind meist keine Zentrierflächen vorgesehen, die zum Zentrieren eines Elektromotors bezüglich des Propellerflansches verwendet werden könnten.

Daher ist vorgesehen, von vorne die napfförmig ausgebildete Zentriereinrichtung auf einen bestehenden Zentrieransatz eines Propellerflansches zu setzen. Dieser Zentrieransatz übernimmt dann zusätzlich die Zentrierung des zumindest zweigeteilten erfindungsgemäßen Flansches und damit des gesamten Elektroantriebes.

Zudem weist die Zentriereinrichtung Bohrungen für Befestigungsmittel wie beispielsweise Schraubenverbindungen auf, die das Zusammenhalten des zumindest zweigeteilten Flansches unterstützen, da die Zentriereinrichtung über dem Flansch anordbar ist.

Schließlich wird der gesamte Elektroantrieb mittels der Propellerbefestigungsschrauben über die Zentriereinrichtung durch den Propellerflansch mit dem zumindest zweigeteilten Flansch verschraubt.

Demgemäß kann der erfindungsgemäße Elektroantrieb für ein Luftfahrzeughybridsystem ohne die irgendwelche Komponenten des Verbrennungsmotors oder des Getriebes zu demontieren auf einfache Weise exakt hinter dem Propellerflansch montiert werden.

Die Propellerwelle dient dabei gleichzeitig als Lagerung für den Elektromotor.

Das Gegendrehmoment des Stators wird von einer Drehmomentabstützung des Stators beispielsweise auf das Motorgehäuse des Verbrennungsmotors oder auf andere Motorbefestigungskomponenten übertragen.

Somit ist auch keine aufwendige Konstruktion zum Befestigen oder Aufnehmen des Elektromotors notwendig, da dies die Propellerwelle über die Lagereinrichtung im Stator übernimmt.

Weiterhin ist erfindungsgemäß ein Hybridsystem für ein Luftfahrzeug vorgesehen. Das Hybridsystem umfasst eine Propellerwelle mit Propellerflansch, einen erfindungsgemäßen Elektroantrieb, der mit dem Propellerflansch verbunden ist, sowie ein Verbrennungsmotor mit Kurbelwelle, wobei über die Kurbelwelle des Verbrennungsmotors die Propellerwelle antreibbar ist.

Mittels eines derartigen Hybridsystems werden die vorstehend beschriebenen Vorteile erzielt.

Zur Änderung der übertragenen Kraft oder des übertragenen Drehmoments vom Motor auf den Propeller kann ein Getriebe vorgesehen sein.

Weiterhin kann erfindungsgemäß vorgesehen sein, dass die Kurbelwelle des Verbrennungsmotors über eine Kupplung mit der Propellerwelle gekoppelt ist.

Bei Luftfahrzeugen ist normalerweise vorgesehen, dass der Verbrennungsmotor den Propeller direkt oder über ein zwischengeschaltetes Propellergetriebe antreibt.

Durch das Vorsehen einer Kupplung zwischen Kurbelwelle und Propellerwelle bzw. insbesondere zwischen Propellergetriebe und Propellerwelle kann die Leistungsübertragung vom Verbrennungsmotor zum Propeller unterbrochen werden, sodass der Propeller einzig mit dem Elektroantrieb antreibbar ist. Eine derartige Trennung bietet erhebliche Vorteile beim Betrieb eines Luftfahrzeugs.

Viele Flugplätze haben mit Lärmproblemen durch startende Flugzeuge zu kämpfen. Ultraleicht- und Leichtflugzeuge sind zwar im Verhältnis zu normalen Motorflugzeugen leiser, dennoch fühlen sich Anwohner häufig durch den damit verbundenen Lärm belästigt.

Durch das Vorsehen der Kupplung zwischen Verbrennungsmotor und Propeller kann der erfindungsgemäße Elektroantrieb dafür verwendet werden, das Luftfahrzeug rein mit elektrischer Energie und somit nahezu geräuschlos zu starten.

Hierbei ist vorgesehen, erst auf einer bestimmten Flughöhe bzw. im Anschluss an die Steigphase auf den Betrieb mit Verbrennungsmotor umzuschalten.

Zudem bietet der erfindungsgemäße Elektroantrieb eine erhöhte Ausfallsicherheit für Luftfahrzeuge.

Beim Ausfall des Verbrennungsmotors durch ein technisches Problem oder durch Treibstoffmangel steht plötzlich keine Motorleistung mehr zur Verfügung. Dann ist der Pilot gezwungen, sehr kurzfristig eine geeignete Landemöglichkeit zu finden.

Durch Auskoppeln des Verbrennungsmotors vom Propeller, d. h. durch Öffnen der Kupplung, kann der Pilot die volle Leistung des Elektromotors nutzen, da dieser von der Kurbelwelle des Verbrennungsmotors entkoppelt ist und diese nicht mit antreiben muss.

Dies wird insbesondere dadurch bewirkt, dass der Elektroantrieb direkt mit dem Propellerflansch verbunden ist.

Je nach Akkukapazität steht dem Piloten nun wesentlich mehr Zeit für eine Sicherheitslandung zur Verfügung oder er hat gegebenenfalls sogar genug Reserven, um den nächstgelegen Flugplatz erreichen zu können.

Bei bekannten und insbesondere häufig verwendeten Flugzeugmotoren, beispielsweise von der Firma Rotax, ist häufig eine Rutschkupplung vorgesehen, um den Motor bei Bodenberührung des Propellers vor Beschädigungen zu schützen.

Diese Kupplung kann erfindungsgemäß durch eine mechanisch betätigbare oder hydraulisch betätigbare Kupplung ersetzt werden, die sowohl die Funktion einer Rutschkupplung erfüllt und/oder das Entkoppeln von Kurbelwelle und Propellerwelle ermöglicht.

Gemäß einem weiteren Aspekt der vorliegenden Erfindung können ein Rad oder vorzugsweise zumindest zwei der Räder des Flugzeugfahrwerks mit einem Elektroantrieb, wie z. B. einem Radnabenmotor, versehen sein.

Hierdurch ist es möglich, in der Beschleunigungsphase auf der Startbahn Energie einzusparen, da der Wirkungsgrad zum Fahren eines Flugzeuges auf der Landebahn derartiger Radnabenantriebe wesentlich höher ist, als den Fahrvorgang mittels des Propellers zu realisieren.

Hierbei ist vorgesehen, dass während des Anrollens und Beschleunigens nur so viel Leistung auf den Elektromotor für den Propellerantrieb geschaltet wird, dass dieser nicht bremst, sondern einen geringfügigen Schub erzeugt.

Der Großteil der zur Verfügung stehenden elektrischen Leistung wird auf die Elektroantriebe der Räder geleitet, die sich vorzugsweise in den Haupträdern des Fahrwerks befinden.

Mit zunehmender Rollgeschwindigkeit wird die Propellerdrehzahl erhöht. Erst kurz vor dem Abheben wird dann wesentlich mehr Leistung auf den Propeller gegeben. Sobald die Räder den Bodenkontakt verlieren, drehen sich diese schlagartig schneller. Die Elektronik registriert dies mittels geeigneter Sensoren, beispielsweise mittels entsprechender Drehzahlsensoren, und schaltet die Elektromotoren der Räder ab. Dann wird die volle Leistung auf den Elektromotor gegeben, der den Propeller antreibt.

Weiterhin kann eine Leistungsregeleinrichtung für die Räder vorgesehen sein, die nach Art einer Anti-Schlupf-Reglung ausgebildet ist. Mittels dieser Leistungsregeleinrichtung kann die an die Räder abgegebene Antriebsleistung derart begrenzt werden, dass die Leistung automatisch reduziert wird, sobald der Schlupf zwischen einer Umfangsgeschwindigkeit eines Rades und dem Untergrund einen gewissen Grenzwert übersteigt.

Die Relativgeschwindigkeit des Untergrunds zur Radumfangsgeschwindigkeit kann durch einen Vergleich mit den übrigen Räder des Fahrwerks, ähnlich wie bei einem KFZ ermittelt werden. Eine Möglichkeit diese auch bei nassem oder rutschigem Untergrund eindeutig ermitteln zu können, besteht darin, eine Fotosensorik vorzusehen, die die Geschwindigkeit des sich unter dem Flugzeug hinwegbewegenden Untergrunds durch laufende Bildaufnahmen und -analysen errechnet.

Die Antriebsleistung, die über die Räder durch ein Durchrutschen nicht umgesetzt werden kann, kann direkt auf den Propeller übertragen werden, so dass dieser mit höherer Leistung betrieben wird. D.h. der durch das beim Start immer leichter werdende Flugzeug und dem damit geringer werdenden Anpressdruck der Räder auf den Untergrund größer werdende Schlupf der Räder wird damit automatisch auf ein einstellbares Maximalmaß begrenzt. Überschüssig vorhandene Akkumulatorleistung kann auf den Propeller übertragen werden.

Beim Erreichen einer entsprechenden Flughöhe kann vom Piloten auf den Verbrennungsmotor umgeschaltet werden. Die Kupplung, die den Verbrennungsmotor von der Propellerwelle getrennt hat, wird dann geschlossen und die Zündung entsprechend eingeschaltet.

Auf diese Weise wird der Verbrennungsmotor in Drehung versetzt und gestartet. Die Elektronik detektiert diese zusätzliche Leistung, die über den Verbrennungsmotor bereitgestellt wird, und schaltet den Elektroantrieb ab.

Weiterhin kann erfindungsgemäß eine Sicherheitsschaltung für die Zündung vorgesehen sein, die ein Überdrehen des Verbrennungsmotors ohne Last verhindert, solange die Kupplung geöffnet ist.

Gemäß einem weiteren Aspekt der vorliegenden Erfindung ist ein Kopplungselement zum Verbinden einer leistungshebelseitigen Steuerungsverbindung und einer motorseitigen Steuerungsverbindung eines Hybridsystems vorgesehen. Dieses umfasst eine Stell bzw. Servoeinrichtung zum Betätigen einer motorseitigen Steuerungsverbindung, eine Rückstelleinrichtung zum Zurückstellen der Servoeinrichtung in eine Ausgangsstellung, so dass im Störungsfall oder einer Deaktivierung des Hybridsystems immer eine direkte Verbindung zwischen der leistungshebelseitigen Steuerungsverbindung und der motorseitigen Steuerungsverbindung besteht. Die mechanische Bewegungsübertragungseinrichtung zum Verbinden einer leistungshebelseitigen Steuerungsverbindung und der Servoeinrichtung ist derart ausgebildet, dass bei einer Veränderung der Leistungshebelstellung im reinen Verbrennungsbetrieb eine direkte Verbindung zur motorseitigen Steuerung erhalten bleibt.

Die Servoeinrichtung kann derart ansteuerbar sein, dass bei einer leistungshebelseitigen Gaswegnahme die motorseitige Steuerungsverbindung in eine höhere Gasstellung stellbar ist, so dass die überschüssige Energie des Verbrennungsmotors an einen Elektromotor, der nun als Generator wirkt, über die Kurbelwelle abgebbar und einem Akkumulator zuführbar ist.

Die Bewegungsübertragungseinrichtung kann ein Schiebeschlitten oder eine Drehelement, wie z.B. eine Drehscheibe, sein.

Gemäß einem weiteren Aspekt der vorliegenden Erfindung ist ein Leistungssteuerungssystem insbesondere für ein erfindungsgemäßes Luftfahrzeughybridsystem vorgesehen. Dieses umfasst ein Kopplungselement, einen Motorsensor zum Erfassen der Stellung der motorseitigen Steuerungsverbindung und einen Leistungssensor zum Erfassen der Stellung der leistungshebelseitigen Steuerungsverbindung.

Weiterhin kann das Leistungssteuerungssystem eine erfindungsgemäße Leistungshebeleinrichtung umfassen, die nachfolgend noch genauer beschrieben wird.

Dieses Leistungssteuerungssystem umfasst ein erfindungsgemäßes Kopplungselement mit einer Bewegungsübertragungseinrichtung zum Verbinden mit einer leistungshebelseitigen Steuerungsverbindung und einer Servoeinrichtung zum Betätigen einer motorseitigen Steuerungsverbindung.

Das Kopplungselement kann eine Erhöhung der Leistung des Verbrennungsmotors bewirken, obwohl der Leistungshebel eine niedrigere Leistung vom Verbrennungsmotor anfordern würde.

Es kann eine mechanische Rückstelleinrichtung zum Zurückstellen der Servoeinrichtung in eine Ausgangsstellung vorgesehen sein, um im Störungsfall oder bei abgeschaltetem Hybridantrieb eine sichere mechanische Verbindung sicherzustellen.

Dadurch, dass das Kopplungselement eine mechanische Rückstelleinrichtung aufweist ist, ist sichergestellt, dass die Servoeinrichtung ohne Einfluss einer Steuereinrichtung oder bei Stromausfall zurückgestellt wird, sodass eine direkte Verbindung zwischen Leistungshebel und Verbrennungsmotor sichergestellt ist, d.h. dass der Leistungshebel im Störungsfall immer eine direkte Verbindung zur Steuerung der Motorleistung besitzt.

Die Bewegungsübertragungseinrichtung kann ein Schiebschlitten oder eine Drehscheibe oder ein anderes Element sein, dass eine Erhöhung der Leistungsanforderung über die motorseitige Steuerungsverbindung in Bezug auf die leistungshebelseitige Steuerungsverbindung bewirken kann.

Weiterhin kann ein Motorsensor zum Erfassen der Stellung der motorseitigen Steuerungsverbindung vorgesehen sein. Durch den Motorsensor wird die Position der motorseitigen Steuerungsverbindung erfasst und an das Steuersystem übertragen.

Die Steuerungsverbindungen können z. B. als Gestänge oder als Seilzug ausgebildet sein.

Beim Aktivieren des erfindungsgemäßen Elektroantriebes wird die Stellung des Leistungshebels über die Bewegungsübertragungseinrichtung (Schiebeschlitten, Drehscheibe, odgl.) übertragen. Die motorseitige Steuerungsverbindung wird dann von der Servoeinrichtung derart eingestellt, dass die Leistung des Verbrennungsmotors durch eine entsprechende Vergaserstellung erhöht werden kann.

Zudem kann ein Leistungssensor zur Erfassung der Stellung des Leistungshebels vorgesehen sein, der die Position der leistungshebelseitigen Steuerungsverbindung erfasst. Auf diese Weise wird beim Aktivieren des erfindungsgemäßen Elektroantriebes die Stellung des Leistungshebels mittels des Leistungshebelsensors erfasst und an eine Steuereinrichtung weitergeleitet werden.

Zudem kann dieser Leistungssensor dem Leistungssteuerungssystem ein Signal mit Informationen über eine angeforderte elektrische Leistung und/oder über eine angeforderte Bremsleistung bzw. -funktion des Elektromotors in einem Generatorbetrieb übermitteln.

Die motorseitige Steuerungsverbindung wird dann von der Servoeinrichtung derart eingestellt, dass die Leistung des Verbrennungsmotors durch eine entsprechende Vergaserstellung erhöht werden kann.

Eine Verringerung der Leistung wird bei beiden Ausführungsformen mechanisch ausgeschlossen, so dass es nicht möglich ist, dass der Pilot im Störungsfall weniger als die vom Leistungshebel vorgegebene Leistung zur Verfügung hat.

Beim Zurücknehmen der Leistung über den Leistungshebel kann die Elektronik den Verbrennungsmotor dennoch mit höherer Leistung, sprich am optimalen Betriebspunkt, weiterlaufen lassen.

Die überschüssige Energie wird hierbei an den Elektromotor, der nun als Generator wirkt, über die Kurbelwelle abgegeben und einem entsprechenden Akkumulator zugeführt.

Bei Vollladung des Akkus geht die Motorleistung wieder auf die vom Piloten gewünschte Leistung zurück, indem die Servoeinrichtung diese zurückregelt und gleichzeitig die Ladefunktion vom Generator zum Akkumulator abgestellt wird.

Im Störungs- oder Notabschaltfall kann die Stromversorgung zur Servoeinrichtung bzw. zur gesamten Hybridsteuerung unterbrochen werden, wodurch diese keine Funktion mehr hat, wobei hierbei insbesondere ein bürstenloser Stellmotor vorgesehen sein kann, da dieser besonders leichtgängig zu bewegen ist.

Durch die Rückstelleinrichtung wird die Servoeinrichtung in eine Endstellung gebracht, wodurch eine direkte Verbindung vom Leistungshebel zum Verbrennungsmotor sichergestellt ist.
Somit kann der Pilot den Verbrennungsmotor wieder direkt, d. h. ohne das erfindungsgemäße Leistungssteuerungssystem, ansteuern.

Weiterhin ist erfindungsgemäß eine Leistungshebeleinrichtung, für ein Luftfahrzeughybridsystem, insbesondere Luftfahrzeughybridsystem gemäß der vorliegenden Erfindung vorgesehen. Diese umfasst einen Leistungshebel, der zwischen einer Leerlaufstellung und einer Vollgasstellung des Verbrennungsmotors bewegbar ist. Bei Erreichen der Vollgasstellung ist ein Widerstand einer Freigabeeinrichtung zu überwinden, sodass beim Überschreiten der Vollgasstellung des Verbrennungsmotors ein Elektroantrieb bis zur vollen Leistung des Hybridsystems hinzuschaltbar ist.

Mittels einer derartigen Leistungshebeleinrichtung kann zusätzlich zur hundertprozentigen bzw. Vollgasleistung des Verbrennungsmotors die zusätzliche Elektromotorleistung abgerufen werden.

Um sicherzustellen, dass während des Fluges nicht unabsichtlich elektrische Leistung vom Elektroantrieb abgerufen wird, muss der Widerstand der Freigabeeinrichtung überwunden werden. Dieser Widerstand kann durch eine Federkraft oder auch einen zu betätigenden Freigabeknopf ausgebildet sein.

Durch diese Freigabefunktion des Leistungshebels wird verhindert, dass unabsichtlich der Elektroantrieb zugeschaltet wird und der Akkumulator während des Fluges entladen wird.

Weiterhin kann die erfindungsgemäße Leistungshebeleinrichtung am vorderen Endpunkt einen Schalter umfassen, der den Sofortstart des Verbrennungsmotors auslösen kann.

Die Leistungshebeleinrichtung für ein Luftfahrzeughybridsystem umfasst gemäß einem weiteren Aspekt einen Leistungshebel, der in einem reinen Elektrobetriebsmodus des Systems einen Bremsbereich zum Abbremsen einer Luftschraube ausbildet, wobei in diesem Bremsbereich der Elektromotor als Generator wirkt so dass eine Luftschraube abbremsbar ist.

Der Bremsbereich kann im einem unteren Leistungshebelbereich im Bereich zwischen der Leerlaufstellung und der Vollgasstellung des Verbrennungsmotors oder im Bereich hinter der Leerlaufstellung des Verbrennungsmotors ausgebildet sein.

Im einem reinen Elektrobetrieb, d.h. bei abgestelltem Verbrennungsmotor und geöffneter Kupplungsverbindung zwischen Verbrennungsmotor und Luftschraube, kann der Leistungshebel im Bremsbereich verwendet den Elektromotor in einen Generatorbetrieb schalten. Im Sink- oder im Landeanflug kann der als Generator betriebene Motor zum Abbremsen der Luftschraube genutzt werden, indem die im Generator erzeugte Leistung zum Laden des Akkumulators genutzt wird. Wenn der Akkumulator bereits vollständig geladen ist, kann die Leistung über einen Lastwiderstand abgesetzt werden, der die überschüssige Leistung in Wärmeenergie umwandelt.

Diese thermische Energie kann bei vollständig geladenem Akkumulator nicht genutzt werden. Die Abführung der Energie über den Lastwiderstand ist zum Abbremsen der Luftschraube vorgesehen, so dass das Flugzeug rascher sinken kann.

Hierdurch kann der Verbrennungsmotor beim Sinken oder im Landeanflug vollständig abgeschaltet werden, da eine eventuell erforderliche Bremsleistung durch eine Leistungsabgabe an den Generator und/oder den Akkumulator bzw. den Lastwiderstand erfolgen kann.

Auf diese Weise ist ein nahezu lautloser Landeanflug und damit verbunden eine wesentliche Geräuschreduzierung möglich.

Falls der Verbrennungsmotor wieder benötigt wird, kann jederzeit auf den Verbrennungsmotor umgeschalten werden, so wie dies bereits an Hand des Startvorganges nach einem rein elektrischen Start beschrieben wurde.

Indem der Leistungshebel in die vordere Endstellung zum Abrufen der maximalen Leistung des Gesamtsystems gestellt wird kann jederzeit der Verbrennungsmotor genutzt werden. Dann wird der Verbrennungsmotor automatisch gestartet. Zusätzlich steht die elektrische Leistung zur Verfügung. Dies kann durch eine Art "Kickdown"-Schalter am vorderen Anschlag des Leistungshebels erfolgen.

Dies kann z.B. beim Durchstarten vor oder auf einer Landepiste von Vorteil sein, da sofort Leistung des Verbrennungsmotors und des Elektroantriebes für das Durchstarten zur Verfügung stehen, ohne dass in dieser Situation die Hand vom Leistungshebel genommen und ein Verbrennungsmotor-Aktivierungsknopf am Instrumentenbrett betätigt werden muss.

Im Folgenden wird die erfindungsgemäße Vorrichtung anhand der Figuren näher beschrieben. Diese zeigen in:
Fig. 1 einen Propellerflansch, einen zweigeteilten ringförmigen Flansch, einen Stator mit Lagerungseinrichtung in einer perspektivischen Darstellung,
Fig. 2 die Darstellung aus Fig. 1 mit in die Lagereinrichtung des Stators eingesetztem zweigeteiltem Flansch in einer perspektivischen Darstellung,
Fig. 3 die Darstellung aus Fig. 2 mit an den Propellerflansch herangerücktem Stator, Lagerungseinrichtung und Flansch,
Fig. 4 die Darstellung aus Fig. 3 mit Zentriereinrichtung,
Fig. 5 die Darstellung aus Fig. 4 mit Rotor,
Fig. 6 eine seitlich geschnittene Darstellung eines Kupplungselements für ein Hybridsystem in einer seitlich geschnittenen Ansicht,
Fig. 7 eine schematische Darstellung des Aufbaus einer erfindungsgemäßen Leistungsansteuerung, und
Fig. 8 eine schematische Darstellung des Aufbaus einer weiteren Ausführungsform einer erfindungsgemäßen Leistungsansteuerung,
Fig. 9 eine erfindungsgemäße Leistungshebeleinrichtung in einer schematischen Ansicht, bei der der Bremsbereich hinter einer Leerlaustellung bzw. eines Leistungsbereichs des Verbrennungsmotors liegt.
Fig. 10 eine erfindungsgemäße Leistungshebeleinrichtung in einer schematischen Ansicht, bei der der Bremsbereich im unteren Leistungsbereich des Verbrennungsmotors liegt.
Fig. 11 zeigt einen erfindungsgemäßen Hybridantrieb in einer seitlich geschnittenen Ansicht,
Fig. 12 eine Übersicht umfassend die Leistungshebeleinrichtung aus Fig. 9, ein Leistungssteuerungssystem, ein Koppelelement, eine leistungshebelseitige Steuerverbindung, eine motorseitige Steuerverbindung sowie eine Drosselklappe,
Fig. 13 eine Übersicht umfassend die Leistungshebeleinrichtung aus Fig. 10, das Leistungssteuerungssystem, das Koppelelement, die leistungshebelseitige Steuerverbindung, die motorseitige Steuerverbindung sowie eine Drosselklappe, und
Fig. 14 zeigt die Übersicht aus Fig. 13, bei der die Leistungsanforderung seitens des Leistungshebels zurückgenommen ist und die Servoeinrichtung des Kopplungselements die Leistungsanforderung an den Verbrennungsmotor durch Verdrehen des Hebels erhöht.

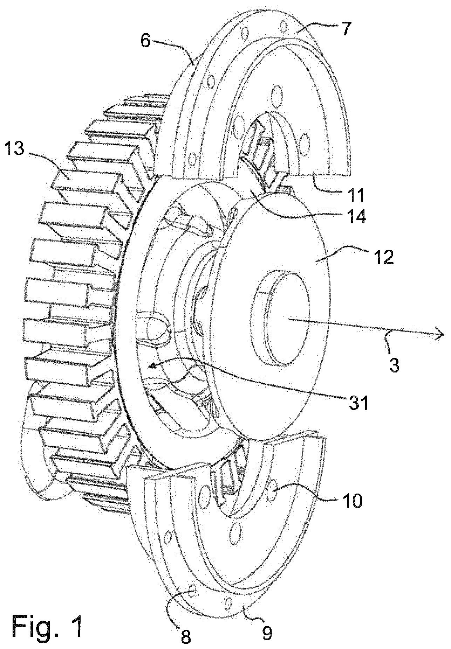

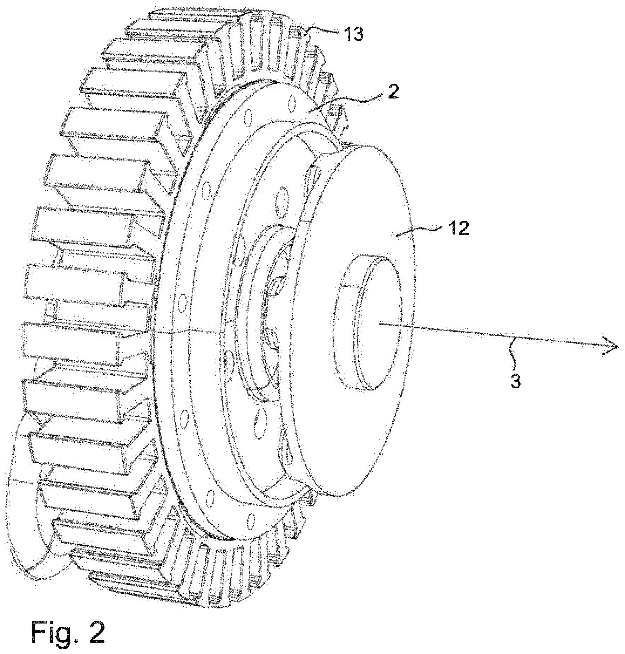

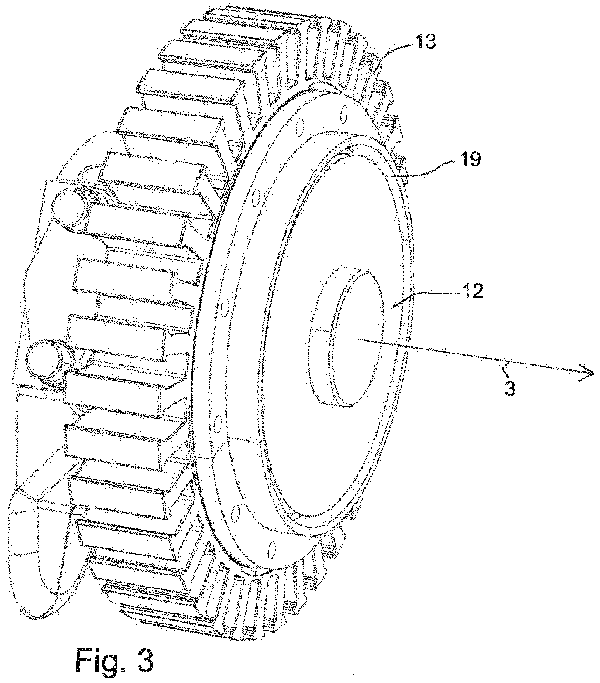

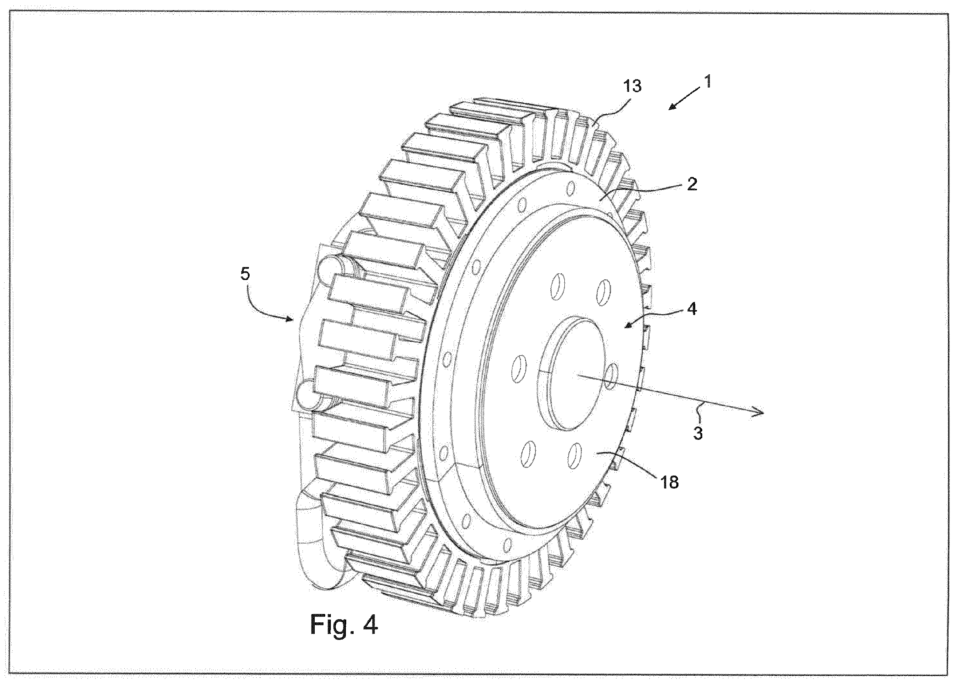

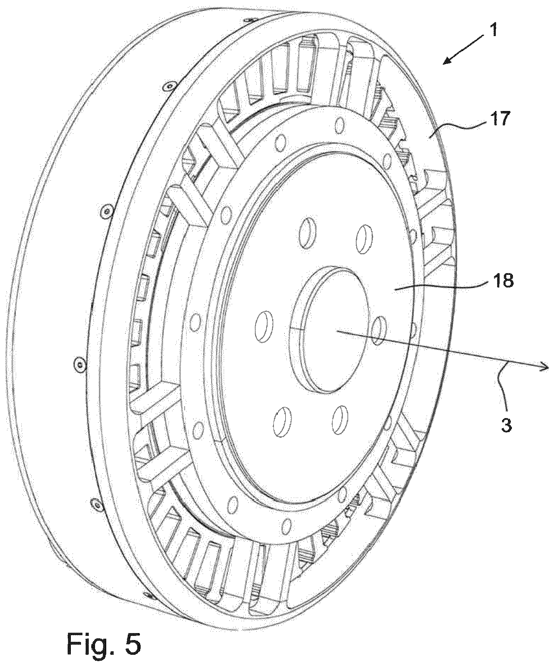

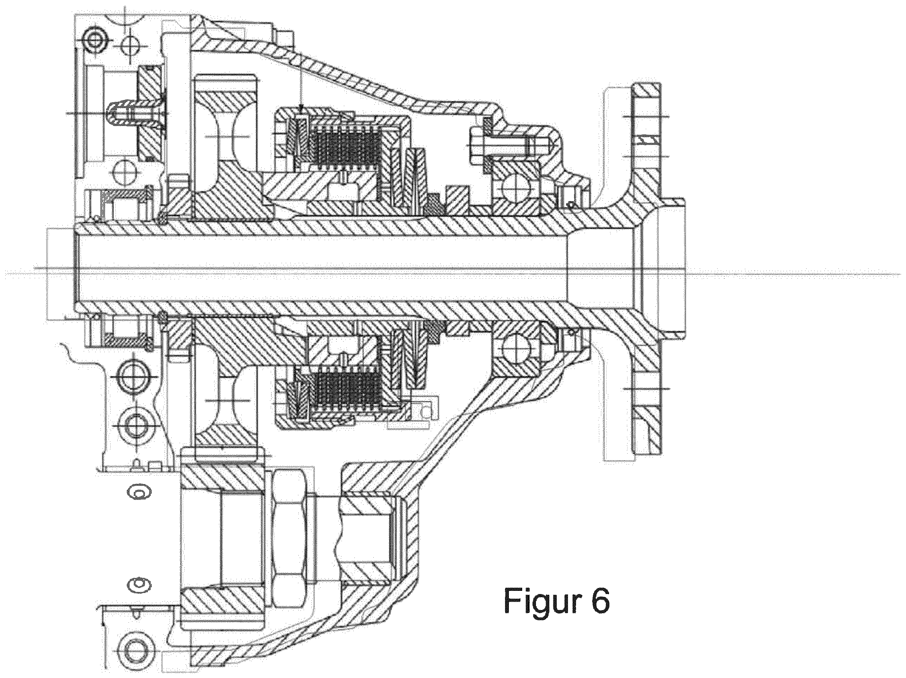

Im Folgenden wird der Aufbau eines erfindungsgemäßen Elektroantriebes 1 für ein Luftfahrzeughybridsystem beschrieben (Figuren 1 bis 5 und Figuren 6 und 11). Dieser umfasst einen Flansch 2, einen Stator 13 und einen Rotor 17.

Der Flansch 2 ist zumindest zweigeteilt und ringförmig ausgebildet. Eine quer zu einer Axialrichtung 3 verlaufende Stirnseite des Flansches 2 wird als Propellerseite 4 bezeichnet und eine andere Stirnseite des Flansches 2 wird als Motorseite 5 bezeichnet.

Auf einer Motorseite 5 ist an dem ringförmigen Flansch 2 ein rohrförmiger Lageraufnahmeabschnitt 6 ausgebildet.

Auf der Propellerseite 4 ist ein in etwa rohrförmiger Rotoraufnahmeabschnitt 7 ausgebildet.

Ein zwischen Lageraufnahmeabschnitt 6 und Rotoraufnahmeabschnitt 7 sich in radialer Richtung nach außen erstreckender Steg bildet einen Befestigungsabschnitt 9 aus und weist radial umlaufend und gleich beabstandet voneinander angeordnete Durchgangsbohrungen 8 auf.

Ein sich in radialer Richtung nach innen erstreckender Steg bildet einen Befestigungsabschnitt 11 aus weist ebenfalls radial umlaufend gleich beabstandet voneinander angeordnete Durchgangsbohrungen 10 auf. Über diese Durchgangsbohrungen 10 ist der Flansch mit einem Propellerflansch 12 eines Luftfahrzeuges verbindbar.

Weiterhin umfasst der Elektroantrieb 1 den Stator 13. Der Stator 13, in dem die elektrischen Magnetwicklungen aufgenommen sind, weist im Zentrum eine ringförmige Lagereinrichtung 14 mit einer Wellendurchgangsöffnung 31 auf, wobei die Lagereinrichtung 14 z. B. als Wälzlager ausgebildet.

Weiterhin ist am Stator eine Drehmomentabstützung 15 vorgesehen.

Die Lagereinrichtung des Stators 13 ist auf einer Mantelwandung 16 des Lageraufnahmeabschnitts 6 anordbar. Um ein Verrutschen der Lagereinrichtung 14 auf dem Lageraufnahmeabschnitt 6 zu verhindern, können bekannte Mittel 38 zum Fixieren von Komponenten auf Wellen in axialer Richtung, wie z. B. ein Seegerring oder dergleichen, vorgesehen sein.

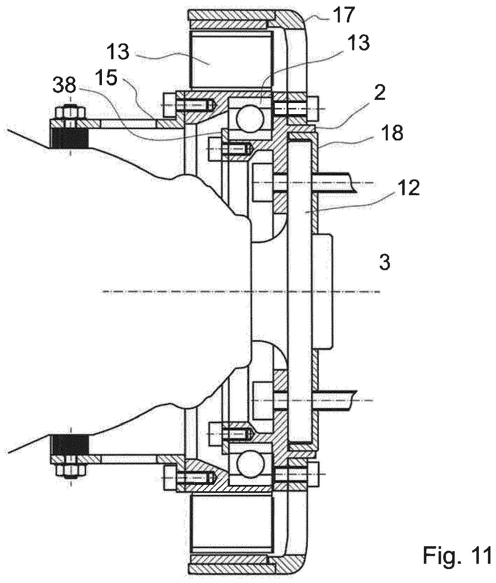

Fig. 11 zeigt beispielhaft eine solche axiale Fixiereinrichtung 38 mittels eines Ringflansches 38, der die Lagereinrichtung 14 auf dem Lageraufnahmeabschnitt 6 in axialer Richtung fixiert. Alternativ können auch ein oder mehrere Ringsegmente vorgesehen sein.

Zudem weist der Elektroantrieb einen Rotor 17 auf, der auf einer Mantelwandung des Rotoraufnahmeabschnitts 7 anordbar ist.

Eine napfförmige Zentriereinrichtung 18 ist in einen zwischen Rotor 17 und Flansch 2 ausgebildeten Ringspalt 19 einsetzbar.

Demgemäß sind auf einer Motorseite des Propellerflansches 12 der Flansch 2 sowie der Stator 13 angeordnet.

Auf einer Rotorseite des Propellerflansches 12 sind der Rotor 17 sowie die Zentriereinrichtung 18 angeordnet.

Der Rotor 17 ist mit dem Flansch 2 über die in dem Befestigungsabschnitt 11 ausgebildeten Durchgangsbohrungen 10 verbunden.

Propellerschrauben zum Befestigen eines Propellers an entsprechend im Propellerflansch 12 ausgebildeten Durchgangsbohrungen 10 verbinden einen Propeller (nicht dargestellt) mit der Zentriereinrichtung 18, dem Propellerflansch 12 und dem Flansch 2.

Gemäß einer alternativen Ausführungsform des Flansches 2 kann dieser auch drei-, vier- oder mehrteilig ausgebildet sein. Vorteilhafterweise sind die einzelnen kreissegmentförmigen Abschnitte eines derart mehrteilig ausgebildeten Flansches 2 gleich groß.

Im Folgenden wird ein erfindungsgemäßes Luftfahrzeughybridsystem beschrieben.

Ein Antrieb eines bekannten Luftfahrzeuges umfasst einen Verbrennungsmotor mit einer Kurbelwelle, wobei die Kurbelwelle über ein Propellergetriebe mit einer Propellerwelle verbunden ist.

Die Propellerwelle weist an dem freien Ende einen Propellerflansch auf, an dem ein Propeller befestigt ist.

Ein erfindungsgemäßes Luftfahrzeughybridsystem wird dadurch ausgebildet, dass an dem Propellerflansch der vorstehend beschriebene erfindungsgemäße Elektroantrieb 1 befestigt ist.

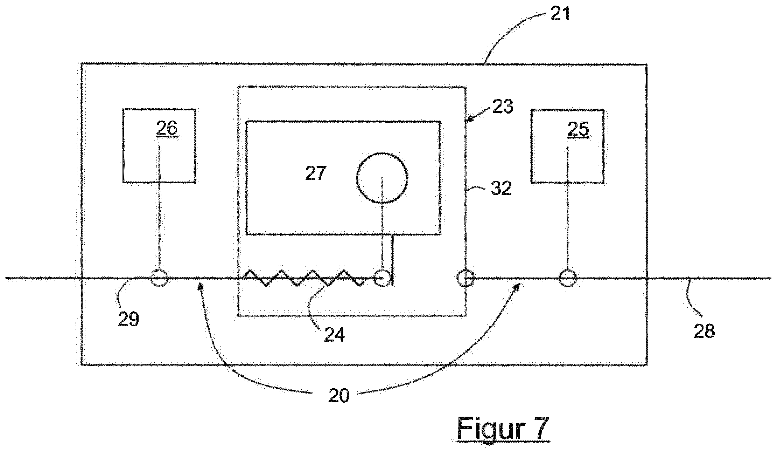

Gemäß einer vorteilhaften Ausführungsform des Luftfahrzeughybridsystems ist zwischen dem Propellergetriebe und der Propellerwelle eine Kupplung angeordnet (Figur 7).

Mittels der Kupplung ist die gesamte Getriebemechanik des Propellergetriebes sowie die gesamte Mechanik des Verbrennungsmotors von der Propellerwelle entkoppelbar, so dass der Propeller alleine über den erfindungsgemäßen Elektroantrieb antreibbar ist.

Alternativ kann der Antrieb auch ohne Propellergetriebe ausgebildet sein.

Bei einem solchen Direktantrieb des Propellerflansches über die der Kurbelwelle kann in Bereich der Verbindungs zwischen Kurbelwelle und Propellerflansch eine Kupplung angeordnet sein.

Im Cockpit bekannter Luftfahrzeuge befindet sich ein Leistungshebel, der vom Piloten je nach gewünschter Motorleistung in eine vorbestimmte Winkelstellung bringbar ist. Ein solcher Leistungshebel ist über eine Steuerungsverbindung mit einem Vergaser oder der Einspritzung (bzw. Drosselklappe) eines Verbrennungsmotors verbunden.

Die Steuerungsverbindung ist derart ausgebildet, dass in Abhängigkeit von der Stellung des Leistungshebels der Betrieb des Verbrennungsmotors durch Steuerung des Vergasers oder der Einspritzung (bzw. Drosselklappe) gesteuert wird.

Die Ansteuerung der Steuerungsverbindung kann auch von einer Steuereinrichtung unterstützt oder von dieser gesteuert werden.

Eine Verbindung zwischen Leistungshebel und Verbrennungsmotor bzw. Vergaser oder Einspritzung des Luftfahrzeugs wird somit als Steuerungsverbindung 20 bezeichnet.

Im Folgenden wird ein Leistungssteuerungssystem 21 zum Integrieren in die Steuerungsverbindung 20 zwischen einem Leistungshebel 22 und dem Verbrennungsmotor eines Luftfahrzeugs beschrieben (Figuren 7, 8, 10 und 11 bis 14).

Die Steuerungsverbindung 20 umfasst einen leistungshebelseitigen Steuerungsverbindungsabschnitt 28 und einen motorseitigen Steuerungsverbindungsabschnitt 29.

Das Leistungssteuerungssystem 21 sieht ein Kopplungselement 23 zum Verbinden einer leistungshebelseitigen und einer motorseitigen Steuerungsverbindung 28, 29 zwischen dem Leistungshebel 22 und dem Verbrennungsmotor vor.

Das Kopplungselement 23 weist eine mechanische Rückstelleinrichtung 24, die z.B. als Linearfeder oder Drehfeder oder dergleichen ausgebildet ist, auf. Die Rückstelleinrichtung 24 wirkt mit einer mechanischen Kraft derart auf den Steuerhebel 22 des Steuerelements 27, dass dieser gegen eine Anschlageinrichtung 39 gedrückt wird.

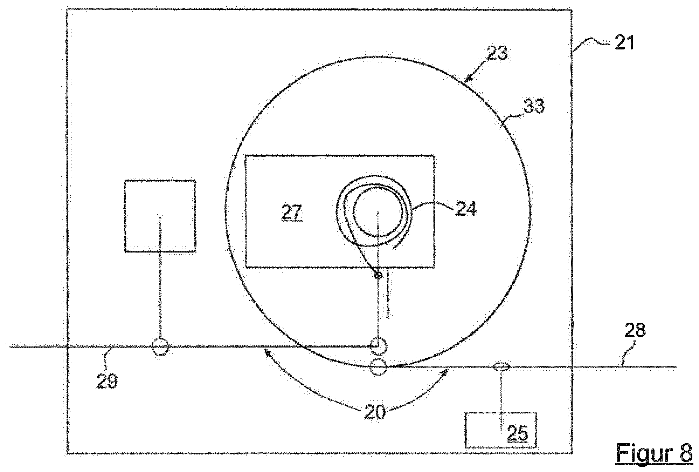

Durch die Rückstelleinrichtung 24 ist sichergestellt, dass im Störungsfall immer eine direkte Verbindung zwischen Leistungshebel und Verbrennungsmotor sichergestellt ist, d.h. dass der Leistungshebel im Störungsfall oder bei abgeschaltetem Hybridsystem immer eine direkte Verbindung zur Steuerung der Motorleistung besitzt. Das Kopplungselement 23 umfasst eine Bewegungsübertragungseinrichtung 32, 33, wie z.B. einen Schiebeschlitten 32 (Figur 7) oder eine Drehscheibe 33 (Figur 8), die mit der leistungshebelseitigen Steuerverbindung verbunden ist und deren Bewegung überträgt. Zudem weist das Kopplungselement 23 eine Servoeinrichtung 27 auf, z.B. einen Servomotor, der mit der Bewegungsübertragungseinrichtung 32, 33 verbunden ist und die motorseitige Steuerungsverbindung 29 betätigt.

Die Servoeinrichtung 27 kann anstatt eines Hebels auch als Linearantrieb ausgebildet sein.

An der motorseitigen Steuerungsverbindung zwischen Kupplungselement 23 und Verbrennungsmotor ist ein Motorsensor 26 zum Erfassen der Stellung der motorseitigen Steuerungsverbindung 29 vorgesehen.

An der leistungshebelseitigen Verbindung zwischen Leistungshebel 22 und Kupplungselement 23 kann ebenfalls ein Leistungshebelsensor 25 zum Erfassen der Stellung des Leistungshebels 22 vorgesehen sein. Dieser Sensor ist jedoch nicht zwingend erforderlich.

Die Servoeinrichtung 27 steuert die motorseitige Steuerungsverbindung 29 derart an, dass die Motorleistung steuerbar ist und insbesondere gegenüber der vom Piloten durch den Leistungshebel vorgegebenen Leistungsanforderung erhöhbar ist.

Die Servoeinrichtung 27, z.B. ein Servo- bzw. Stellmotor, ist zum Betätigen der motorseitigen Steuerungsverbindung 29 vorgesehen und zwischen Kopplungselement 23 und Motor angeordnet.

Im Folgenden wird eine erfindungsgemäße Leistungshebeleinrichtung 30 beschrieben.

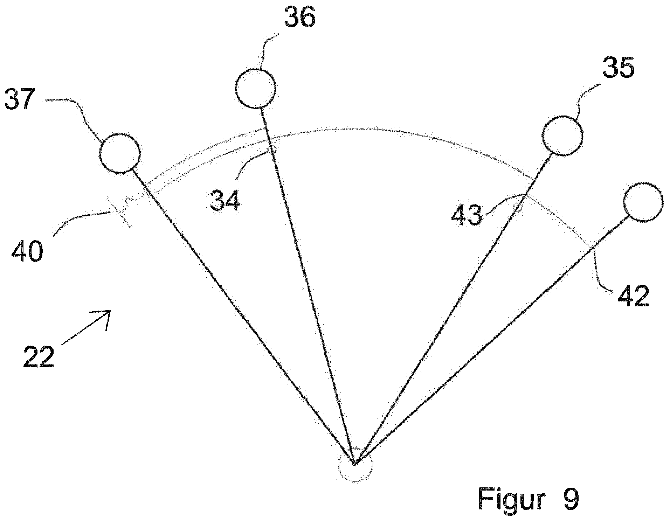

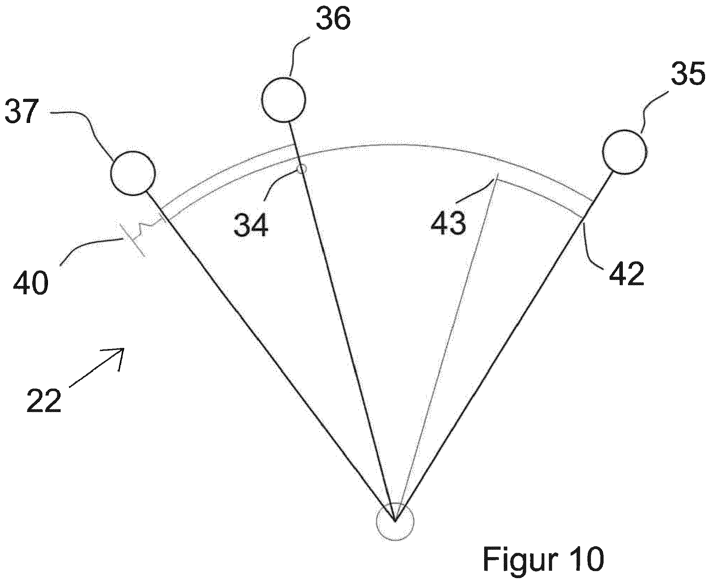

Weiterhin ist erfindungsgemäß eine Leistungshebeleinrichtung 22 vorgesehen. Diese umfasst einen Leistungshebel, der zwischen einer Leerlaufstellung 35 und einer Vollgasstellung 36 des Verbrennungsmotors bewegbar ist (Figur 9, 10). Bei Erreichen der Vollgasstellung ist ein Widerstand einer Freigabeeinrichtung 34 zu überwinden, sodass beim Überschreiten der Vollgasstellung 36 des Verbrennungsmotors der Elektroantrieb bis zur vollen Leistung des Hybridsystems 37 hinzuschaltbar ist.

Im mittleren Hebelwegbereich ist die Leistung zwischen Leerlaufstellung 35 und Vollgasstellung 36 des Verbrennungsmotors steuer- und abrufbar. Nach Überwindung des Widerstandes der Freigabeeinrichtung 34 kann in einem Hebelwegbereich des Elektroantriebs 36 bis 37 vor dem Hebelwegbereich des Verbrennungsmotors 35 bis 36 zusätzlich die Leistung des Elektromotors abgerufen werden (Figur 9, 10, 12, 13, 14).

Weiterhin ist eine Aktivierungseinrichtung (nicht dargestellt) für den reinen Elektrobetrieb des Systems vorgesehen. Die Aktivierungseinrichtung kann bspw. ein entsprechender Schalter im Cockpit sein.

Für einen solchen reinen Elektrobetrieb des Systems kann im unteren Leistungshebelbereich ein Bremsbereich 42 bis 43 des Elektromotors bzw. ein Hebelwegbereich zum Bremsen der Luftschraube 42 bis 43 vorgesehen sein. Innerhalb dieses Bereiches kann der Elektromotor im Generatorbetrieb zum Bremsen der Luftschraube im Sink- oder Landeanflug aktiviert werden. Hierdurch wird die kinetische Energie beim Sinkflug aufgenommen bzw. das Luftfahrzeug abgebremst und/oder es kann ein steilerer Sinkflug realisiert werden.

Im unteren Leistungsbereich kann somit nach Überwindung einer Freigabeeinrichtung die Bremsleistung des Elektromotors abgerufen werden. Die Bremsfunktion des Elektromotors kann so zusätzlich zur Bremsleistung des Verbrennungsmotors genutzt werden. Die Bremsleistung wird jedoch vom Hybridsystem nur derart abgerufen, dass das Abrufen nicht zu einem Abwürgen des Verbrennungsmotors durch zu starkes Bremsen führt.

Figur 10 zeigt einen erfindungsgemäßen Hybrid-Leistungshebel, bei dem im unteren Regelbereich die Bremsfunktion bereits im Hebelbereich des Verbrennungsmotors liegt. Dies ist deshalb möglich, da die Bremsfunktion des Elektromotors in dieser Variante nur bei abgestelltem Verbrennungsmotor aktiviert wird. Die Stellung Leerlauf Verbrennungsmotor 35 entspricht dabei einer Stellung volle Bremsleistung 43 des Elektroantriebs 1 im Generatorbetrieb. Im Bereich zwischen Leerlauf- 35 und Vollgasstellung 36 des Verbrennungsmotors ist eine Hebelstellung Null Bremsleistung 42 angeordnet.

Dieser Bremsbereich kann somit im Bereich des unteren Verbrennungsmotor-Regelbereichs (Fig. 10) oder alternativ unterhalb des Leerlaufpunktes 35 des Verbrennungsmotors ausgebildet sein (Fig. 9). Die Stellung Leerlauf Verbrennungsmotor 35 entspricht dabei einer Stellung Null Bremsleistung 42 des Elektroantriebs 1 im Generatorbetrieb. Im Bereich hinter der Vollgasstellung 36 des Verbrennungsmotors ist eine neue Hebelstellung volle Bremsleistung 43 angeordnet.

In einem kombinierten Verbrennungs-Elektromotor-Betrieb ist in einem unteren Bereich des Leistungshebels zwischen Leerlauf Verbrennungsmotor 35 und Vollgas Verbrennungsmotor 36 die Verbrennungsmotorleistung steuerbar. In einem oberen Leistungshebelbereich zwischen Leerlauf Elektroantrieb 36 und Vollgas Elektroantrieb 37 ist die zusätzlich zur Verfügung stehende Elektromotorleistung abruf- und steuerbar.

Zum Umschalten vom kombinierten Elektro-Verbrennungsmotor-Betrieb zum reinen Elektrobetrieb wird vom Piloten die Aktivierungseinrichtung betätigt. Dann wird die Zündung des Verbrennungsmotors sowie die Einspritzung abgeschaltet. Danach wird die Kupplung geöffnet, die die Verbindung vom Verbrennungsmotor zum Propeller trennt. Dadurch wird der Verbrennungsmotor abgeschaltet.

In diesem nun reinen Elektromotor-Betrieb kann im vorderen Leistungsbereich zwischen Leerlauf Elektroantrieb 36 und Vollgas Elektroantrieb 37 die Leistung des Elektromotors durch die Stellung des Leistungshebels 22 eingestellt werden.

Im mittleren Leistungshebelbereich 35 bis 36 (normalerweise für den Verbrennungsmotor vorgesehen) steht keine Leistung des Verbrennungsmotors zur Verfügung, da dieser ausgeschaltet ist.

Im Bremsbereich 42 bis 43 bzw. im unteren Leistungshebelbereich kann durch Zurückziehen des Leistungshebels 22 die Bremsleistung des Elektromotors aktiviert werden. Je weiter der Leistungshebel nach hinten gezogen wird, desto höher ist die Bremsleistung des Elektromotors.

Um mit einem Luftfahrzeug Durchzustarten wird vom reinen Elektrobetrieb wieder in den kombinierten Elektro-Verbrennungsbetrieb umgeschalten.

Um auf den kombinierten Elektro-Verbrennungsbetrieb am Boden oder im Flug umzuschalten sind zwei Möglichkeiten für das Starten des Verbrennungsmotors vorgesehen:
1. durch die Aktivierung eines dafür vorgesehenen Schalters z.B. "Fly-with-fuel"-Knopf im Bereich der Motorsteuerung am Cockpitpanel.
2. durch einen Start-Schalter 40 am Leistungshebel wie nachfolgend beschrieben.

Am vorderen Anschlag des Leistungshebels 22 kann ein Schalter 40 vorgesehen sein. Wird der Leistungshebel gegen einen Widerstand gegen diesen Schalter gedrückt oder der Pilot bedient den dafür vorgesehenen Schalter im Bereich der Motorsteuerung, so löst das System den Start des Verbrennungsmotors aus.

Die im Elektromotorbetrieb offengehaltene Kupplung wird geschlossen, wodurch der Verbrennungsmotor vom Elektromotor und der Luftschraube mitgedreht wird. Danach wird die Zündung und die Einspritzung aktiviert. Hierdurch startet der Verbrennungsmotor, wodurch zum bereits laufenden Elektromotor zusätzlich die Verbrennungsmotorleistung zur Verfügung steht.

Soll im Landeanflug oder beim Aufsetzen auf der Landebahn durchgestartet werden, so kann der Leistungshebel ganz nach vorne an den oberen Anschlag der Leistungsregelung des Elektromotors geschoben werden und hier der Start des Verbrennungsmotors aktiviert werden, wodurch unmittelbar zur vollen Leistung des Elektromotors auch die Verbrennungsmotorleistung für das Durchstarten zur Verfügung steht.

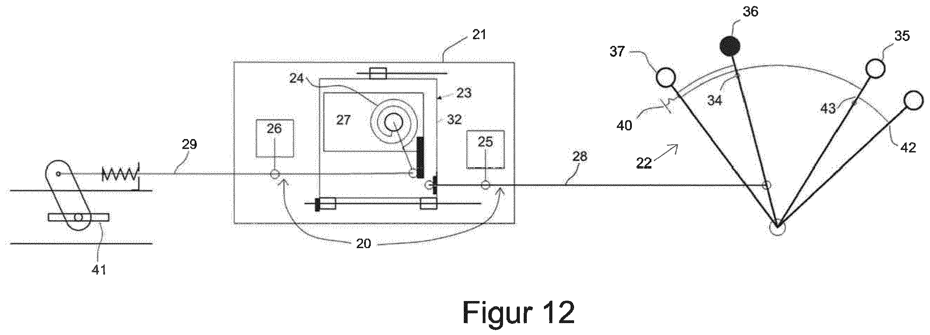

Die Figuren 12 bis 14 zeigen eine Übersicht bestehend aus dem Leistungshebel und dem Leistungssteuerungssystem und dem Koppelelement mit einer leistungshebelseitigen Steuerverbindung, einer motorseitigen Steuerverbindung sowie einer Drosselklappe 41.

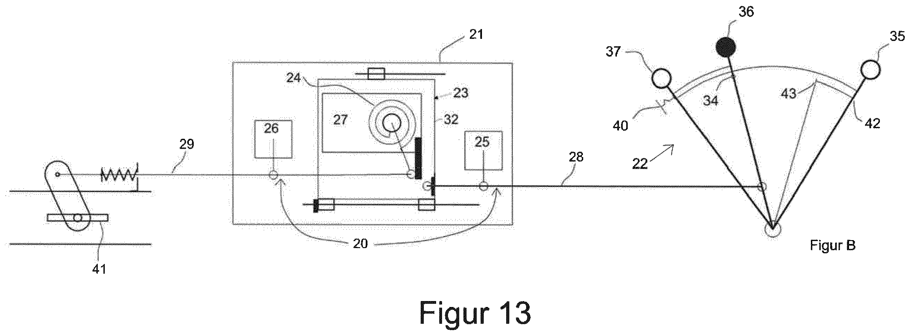

Die Figuren 12 und 13 zeigen die unterschiedlich angeordneten Bremsbereiche, wobei der Bremsbereich auch zwischen diesen beiden Bereichen ausgebildet sein kann.

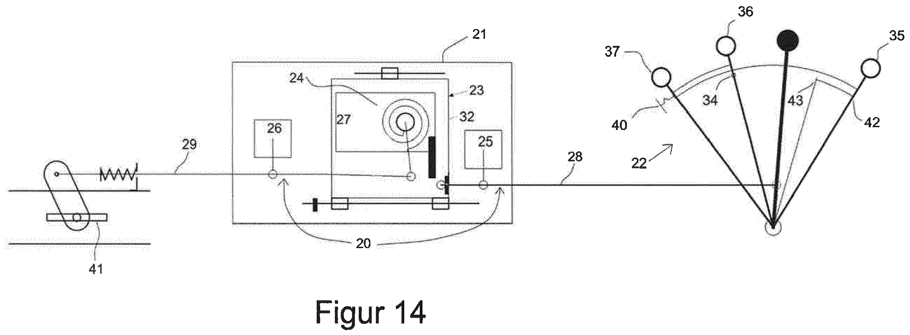

In Figur 14 ist die Leistungsanforderung seitens des Leistungshebels 22 zurückgenommen und die Servoeinrichtung des Kopplungselements die Leistungsanforderung an den gegenüber der tatsächlichen Leistungshebelstellung des Verbrennungsmotor erhöht.

Weiterhin sind erfindungsgemäß Verfahren zum Montieren des Elektroantriebes sowie zum Betrieb des Leistungssteuerungssystems gemäß den vorstehenden Ausführungen vorgesehen.

Eine Leistungshebeleinrichtung für ein Luftfahrzeughybridsystem insbesondere umfasst einen Leistungshebel, der zwischen einer Leerlaufstellung und einer Vollgasstellung für einen Verbrennungsmotor bewegbar ist, wobei bei Erreichen der Vollgasstellung ein Widerstand einer Freigabeeinrichtung zu überwinden ist, sodass beim Überschreiten der Vollgasstellung ein Elektroantrieb zur vollen Leistung eines Hybridsystems hinzuschaltbar ist.

Die Leistungshebeleinrichtung für ein umfasst einen Leistungshebel, der in einem reinen Elektrobetriebsmodus des Systems einen Bremsbereich zum Abbremsen einer Luftschraube ausbildet, wobei in diesem Bremsbereich der Elektromotor als Generator wirkt so dass eine Luftschraube abbremsbar ist.

Bei der Leistungshebeleinrichtung ist der Bremsbereich im einem unteren Leistungshebelbereich im Bereich zwischen der Leerlaufstellung und der Vollgasstellung des Verbrennungsmotors oder im Bereich hinter der Leerlaufstellung des Verbrennungsmotors ausgebildet ist.

Zudem ist ein Kopplungselement zum Verbinden einer leistungshebelseitigen Steuerungsverbindung und einer motorseitigen Steuerungsverbindung eines Hybridsystems vorgesehen. Dieses umfasst eine Servoeinrichtung zum Betätigen einer motorseitigen Steuerungsverbindung, eine Rückstelleinrichtung zum Zurückstellen der Servoeinrichtung in eine Ausgangsstellung, so dass im Störungsfall immer eine direkte Verbindung zwischen der leistungshebelseitigen Steuerungsverbindung und der motorseitigen Steuerungsverbindung besteht, und eine mechanische Bewegungsübertragungseinrichtung zum Verbinden einer leistungshebelseitigen Steuerungsverbindung und der Servoeinrichtung, die derart ausgebildet ist, dass bei einer Veränderung der Leistungshebelstellung im reinen Verbrennungsbetrieb eine direkte Verbindung zur motorseitigen Steuerung erhalten bleibt.

Bei diesem Kopplungselement ist die Servoeinrichtung derart ansteuerbar, dass bei einer leistungshebelseitigen Gaswegnahme die motorseitige Steuerungsverbindung in eine höhere Gasstellung stellbar, so dass die überschüssige Energie an einen Elektromotor, der nun als Generator wirkt, über die Kurbelwelle abgebbar und einem Akkumulator zuführbar ist.

Die Bewegungsübertragungseinrichtung ist ein Schiebeschlitten oder eine Drehscheibe ist.

Ein Leistungssteuerungssystem insbesondere für ein Luftfahrzeughybridsystem umfasst das Kopplungselement, einen Motorsensor zum Erfassen der Stellung der motorseitigen Steuerungsverbindung und einen Leistungssensor zum Erfassen der Stellung der leistungshebelseitigen Steuerungsverbindung.

Bei einem Verfahren zum Steuern eines Luftfahrzeughybridsystems wird dem zumindest ein Elektroantrieb des Luftfahrzeugs verwendet, um ein Luftfahrzeug rein mit elektrischer Energie zu starten und/oder zu Landen und/oder Fliegen.

Durch Auskuppeln eines Verbrennungsmotors und der damit verbunden Entkoppelung von einem Propeller, ist die volle Leistung eines Elektromotors verfügbar.

Ein Rad oder vorzugsweise zumindest zwei der Räder eines Flugzeugfahrwerks sind mit einem Elektroantrieb, um in einer Beschleunigungsphase auf einer Startbahn im Elektrobetrieb anzurollen.

Während des Anrollens und Beschleunigens wird so viel Leistung auf den Elektromotor für den Propellerantrieb geschaltet, dass dieser einen geringfügigen Schub erzeugt.

Mit zunehmender Rollgeschwindigkeit wird eine Propellerdrehzahl erhöht und kurz vor dem Abheben wird wesentlich mehr Leistung auf den Propeller übertragen.

Eine Elektronik detektiert mittels Sensoren sobald die Räder den Bodenkontakt und dann der oder die Elektroantriebe der Räder abgeschaltet werden, so dass die volle Leistung über den Elektroantrieb der Luftschraube an diese abgegeben wird.

Für die Räder ist eine Leistungsregeleinrichtung vorgesehen, die die an die Räder abgegebene Antriebsleistung derart begrenzt, dass die Leistung automatisch reduziert wird, sobald der Schlupf zwischen einer Umfangsgeschwindigkeit eines Rades und dem Untergrund einen gewissen Grenzwert übersteigt.

Die Antriebsleistung, die über die Räder durch den Schlupf nicht umgesetzt werden kann wird direkt auf die Luftschraube übertragen, so dass diese mit höherer Leistung betrieben wird.

Beim Erreichen einer entsprechenden Flughöhe wird vom Piloten auf den Verbrennungsmotor umgeschaltet in dem die Kupplung, die den Verbrennungsmotor von der Propellerwelle getrennt hat, geschlossen und die Zündung entsprechend eingeschaltet wird.

### Bezugszeichenliste

- 1.: Elektroantrieb
- 2.: Flansch
- 3.: Axialrichtung
- 4.: Propellerseite
- 5.: Motorseite
- 6.: Lageraufnahmeabschnitt
- 7.: Rotoraufnahmeabschnitt
- 8.: Durchgangsbohrung
- 9.: Befestigungsabschnitt
- 10.: Durchgangsbohrung
- 11.: Befestigungsabschnitt
- 12.: Propellerflansch
- 13.: Stator
- 14.: Lagereinrichtung
- 15.: Drehmomentabstützung
- 16.: Mantelwandung
- 17.: Rotor
- 18.: Zentriereinrichtung
- 19.: Ringspalt
- 20.: Steuerungsverbindung
- 21.: Leistungssteuerungssystem
- 22.: Leistungshebel
- 23.: Kopplungselement
- 24.: Entriegelungseinrichtung
- 25.: Leistungshebelsensor
- 26.: Motorsensor
- 27.: Servoeinrichtung
- 28.: leistungshebelseitiger Steuerungsverbindungsabschnitt
- 29.: motorseitiger Steuerungsverbindungsabschnitt
- 30.: Leistungshebeleinrichtung
- 31.: Wellendurchgangsöffnung
- 32.: Schiebeschlitten
- 33.: Drehscheibe
- 34.: Freigabeeinrichtung
- 35.: Leerlauf Verbrennungsmotor
- 36.: Vollgas Verbrennungsmotor/Leerlauf Elektroantrieb
- 37.: Vollgas Hybridantrieb
- 38.: axiale Fixiereinrichtung
- 39.: Anschlageinrichtung
- 40.: Schalter
- 41.: Drosselklappe
- 42.: Volle Bremsleistung
- 43.: Null Bremsleistung

## Patentansprüche

1. Elektroantrieb für ein Luftfahrzeughybridsystem umfassend einen Rotor,
einen Stator, und
eine Drehmomentabstützung, wobei ein Gegendrehmoment des Stators über die Drehmomentabstützung an ein Motorgehäuse eines Verbennungsmotors oder einen Motorträger oder auf andere Motorbefestigungskomponenten übertragen und dort aufgenommen wird.

2. Elektroantrieb gemäß Anspruch 1
**dadurch gekennzeichnet,**
**dass** der Rotor mit einem Propeller verbunden ist, sodass das Drehmoment des Rotors auf den Propeller übertragen wird.

3. Elektroantrieb gemäß Anspruch 1 oder 2,
**dadurch gekennzeichnet,**
**dass** der Stator mittels einer Lagereinrichtung drehbar mit dem Rotor verbunden ist.

4. Elektroantrieb gemäß einem der Ansprüche 1 bis 3,
**dadurch gekennzeichnet,**
**dass** der Stator mit einer Struktur eines Luftfahrzeuges verbindbar ist und der Rotor einen ringförmigen Flansch mit einer Wellendurchgangsöffnung zur Befestigung an einem Propellerflansch aufweist, wobei eine Stirnseite des Flansches als Propellerseite und eine andere Stirnseite als Motorseite bezeichnet wird, wobei auf der Motorseite ein Lageraufnahmeabschnitt ausgebildet ist und auf der Propellerseite ein Rotoraufnahmeabschnitt ausgebildet ist, und der Stator eine Lagereinrichtung und eine Drehmomentabstützung aufweist, wobei die Lagereinrichtung im Bereich des Lageraufnahmeabschnitts des Flansches anordbar ist und der Rotor auf dem Rotoraufnahmeabschnitt des Montageflansches fixierbar ist.

5. Elektroantrieb gemäß Anspruch 4,
**dadurch gekennzeichnet,**
**dass** der Flansch zumindest aus zwei Teilen ausgebildet ist, wobei ein jedes dieser Teile des Flansches einen Abschnitt der Wellendurchgangsöffnung begrenzt.

6. Elektroantrieb gemäß einem der Ansprüche 1 bis 5,
**dadurch gekennzeichnet,**
**dass** der Lageraufnahmeabschnitt und der Rotoraufnahmeabschnitt in etwa rohrförmig ausgebildet sind und der Flansch in etwa ringförmig ausgebildet ist.

7. Elektroantrieb gemäß einem der Ansprüche 4 bis 6,
**dadurch gekennzeichnet,**
**dass** eine napfförmige Zentriereinrichtung vorgesehen ist, die zum Zentrieren des Flansches ausgebildet ist und mit einem Zentrieransatz eines Propellerflansches und einem Befestigungsabschnitt des Flansches verbindbar ist.

8. Luftfahrzeughybridsystem umfassend
eine Propellerwelle mit Propellerflansch,
einen Elektroantrieb gemäß einem der Ansprüche 1 bis 7, der mit dem Propellerflansch verbunden ist, und
einen Verbrennungsmotor mit Kurbelwelle, wobei über die Kurbelwelle die Propellerwelle antreibbar ist.

9. Luftfahrzeughybridsystem gemäß Anspruch 8,
**dadurch gekennzeichnet,**
**dass** die Kurbelwelle des Verbrennungsmotors über eine Kupplung mit der Propellerwelle ein- und auskuppelbar ist.

10. Luftfahrzeughybridsystem gemäß Anspruch 9,
**dadurch gekennzeichnet,**
**dass** die Kupplung als Rutschkupplung ausgebildet ist.

11. Luftfahrzeughybridsystem gemäß einem der Ansprüche 8 bis 10,
**dadurch gekennzeichnet,**
**dass** zwischen Kurbelwelle und Propellerwelle ein Getriebe vorgesehen ist.

12. Verfahren zum Betreiben eines Elektroantriebes für ein Luftfahrzeughybridsystem wobei der Elektroantrieb einen Rotor und einen Stator umfasst und der Stator eine Lagereinrichtung und eine Drehmomentabstützung aufweist, wobei ein Gegendrehmoment des Stators über die Drehmomentabstützung auf eine Struktur des Luftfahrzeuges übertragen und dort aufgenommen wird und der Rotor mit einem Propellerflansch eines Luftfahrzeuges verbunden ist, so dass ein Drehmoment des Elektromotors direkt auf den Propeller des Luftfahrzeuges übertragen wird.

13. Verfahren gemäß Anspruch 12, wobei ein Elektroantrieb für ein Luftfahrzeughybridsystem gemäß einem der Ansprüche 1 bis 7 verwendet wird.
